# DEMANDE DE BREVET EUROPEEN

(11) **EP 0 765 779 A1**
(43) Date de publication de la demande: **02.04.1997**
(21) Numéro de dépôt: 96401985.5
(22) Date de dépôt: 19.09.1996
(51) Int. Cl.: B60P 3/035

(54) **Dispositif de manutention pour charger ou décharger un dévidoir porté par un véhicule**

(30) Priorité: 26.09.1995 FR 9511260
(71) Demandeur: GIAT INDUSTRIES, 78000 Versailles (FR)
(72) Inventeur: Gatinet, Alain, 42270 Briennon (FR)

(57) **Abrégé**

Dispositif de manutention pour charger ou décharger un dévidoir (2) porté par un véhicule (3), du type comportant un vérin (11) solidaire du véhicule (3), une structure de réception (14) du dévidoir (2) , articulée par rapport au véhicule (3) et entraînée par le vérin (11), et un cadre (7) de fixation du dévidoir (2). Un système articulé (30) relie le véhicule (3) à la structure de réception (14) pour assurer une rotation de la structure de réception (14) par rapport au système articulé (30) d'une part et au véhicule (3) d'autre part, et des moyens (39) formant butée limitent la rotation de la structure de réception (14) par rapport au système articulé (30).

## Description

Le domaine technique de la présente invention est celui des dispositifs de manutention des dévidoirs mobiles équipant notamment les véhicules de pompiers.

Certains véhicules de pompiers sont équipés à l'arrière de deux dévidoirs sur lesquels sont enroulés des tuyaux. Un dévidoir se présente sous la forme d'un chariot à deux roues, dont l'essieu supporte un tambour de réception des tuyaux, et est muni d'un cadre permettant de le manoeuvrer sur le sol d'une part, et de le reprendre sur le sol pour le charger sur le véhicule d'autre part. A cette fin, on a déjà proposé un dispositif de manutention automatique comprenant un vérin fixé au véhicule et en prise sur une structure de réception du dévidoir articulée par rapport au véhicule. Le cadre du dévidoir est muni de moyens permettant de le relier à la structure de réception soit pour déposer le dévidoir sur le sol, soit pour le reprendre et le ramener sur le véhicule.

Un inconvénient de ce système réside notamment dans le fait que la garde au sol du dévidoir, qui représente une masse de l'ordre de 150 à 200 kg, est donnée par la hauteur du point de fixation de la structure de réception sur le véhicule. Cette hauteur est en général faible et ne permet pas le franchissement de bon nombre d'obstacles que le véhicule doit franchir lors des interventions.

Le but de la présente invention est de fournir un dispositif de manutention de dévidoirs pour véhicules de pompiers évitant l'inconvénient précité, et qui soit de structure simple et compatible avec le dispositif de manutention automatique préexistant.

L'invention a donc pour objet un dispositif de manutention pour charger ou décharger un dévidoir porté par un véhicule, du type comportant un vérin de manutention solidaire du véhicule, une structure de réception du dévidoir, articulée par rapport au véhicule et entraînée par le vérin, et un cadre de fixation du dévidoir apte à être verrouillé sur la structure de réception, dispositif de manutention qui est caractérisé en ce qu'il comprend un système articulé reliant le véhicule à la structure de réception pour assurer d'une part une rotation de la structure de réception par rapport au système articulé et d'autre part une rotation de la structure de réception par rapport au véhicule, et des moyens formant butée limitant la rotation de la structure de réception par rapport au système articulé, ledit système articulé étant apte à augmenter la garde au sol du dévidoir et l'éloigner par rapport au véhicule.

Selon une autre caractéristique de l'invention, le système articulé comprend un ensemble constitué d'un bras et de deux bielles articulées entre elles, un tel ensemble étant disposé de part et d'autre de la structure de réception.

Selon un exemple de réalisation, chaque bras du système articulé est disposé au-dessus des bielles associées, et les moyens formant butée sont constitués par un prolongement de chaque bielle fixée à la structure de réception, prolongements sur lesquels vient s'appliquer ladite structure.

D'une manière générale, le prolongement de chaque bielle délimite un angle d'environ 120° avec la bielle correspondante.

Avantageusement, chaque bielle et son prolongement forment une pièce unique.

En variante, chaque bras du système articulé est disposé en-dessous des bielles associées, et les moyens formant butée sont constitués par l'une des bielles associées.

L'avantage principal de l'invention réside dans le fait que le point de reprise du dévidoir au sol est abaissé par rapport au véhicule, ce qui facilite grandement les opérations de manipulation du dévidoir.

D'autres caractéristiques, avantages et résultats de l'invention apparaîtront plus clairement à la lecture du complément de description, donné à titre d'illustration en relation avec les dessins sur lesquels :
- la figure 1 est une vue schématique en élévation montrant les éléments principaux du dispositif de manutention selon l'art antérieur et son principe de fonctionnement,
- la figure 2 est une vue schématique montrant le déploiement global du dispositif de manutention selon l'invention,
- la figure 3 est une vue schématique montrant le déploiement partiel du dispositif de manutention selon l'invention,
- la figure 4 est une vue schématique montrant le repli total du dispositif de manutention selon l'invention,
- la figure 5 montre un exemple de réalisation des moyens formant butée,
- la figure 6 montre une réalisation particulière des moyens formant butée,
- la figure 7 est une vue en perspective du dispositif de manutention selon l'invention, et
- la figure 8 est une vue en perspective du dispositif de manutention selon l'invention sur lequel est fixé le dévidoir.

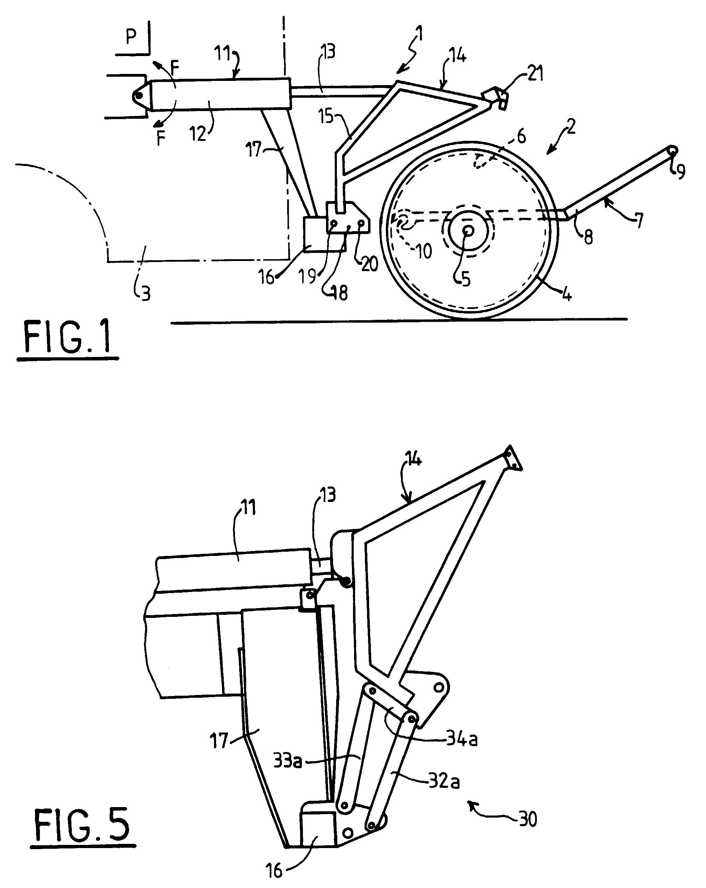

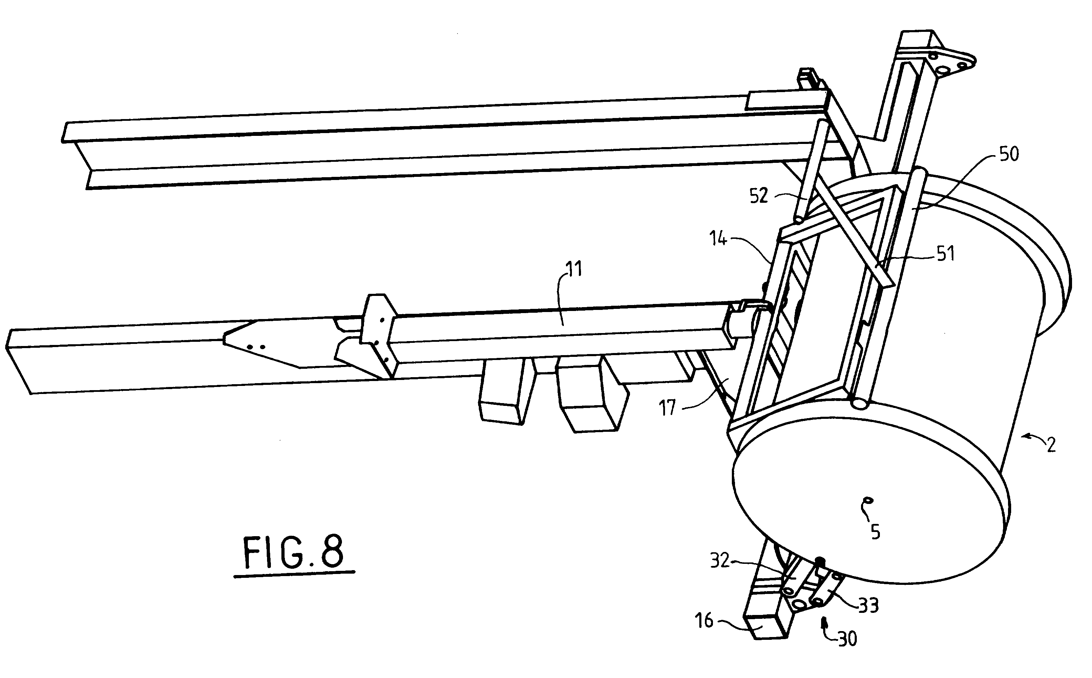

La figure 1 montre un dispositif connu de manutention 1 d'un dévidoir 2 qui doit être chargé ou déchargé d'un véhicule 3 représenté partiellement en traits mixtes. Le dévidoir 2 comprend de manière classique deux roues 4 montées sur un essieu 5 supportant également un tambour 6 de réception de tuyaux. Le dévidoir 2 est muni d'un cadre 7 en forme d'U, dont les deux branches 8 sont fixées sur l'axe 5 de manière articulée et dont la base, visible sur la figure 8, est prolongée par une traverse 9. Chaque branche 8 est prolongée par une fourche 10 située à l'opposé de la base et destinée à coopérer avec une structure portante décrite ci-après.

Le dispositif 1 comprend classiquement un vérin 11, dont le corps 12 est fixé de manière articulée au véhicule 3 et dont la tige 13 est reliée à une structure de réception 14 du dévidoir 2.

La structure de réception 14 est constituée d'un châssis 15 venant coiffer le dévidoir 2. Ce châssis 5 est articulé par rapport à une poutre 16 montée transversalement à l'arrière du véhicule 3 et fixée à ce dernier par une jupe déflectrice 17. La poutre 16 est généralement fixée à un niveau autorisant un débattement limité du dévidoir 2 vers le sol et correspondant globalement à la garde au sol du véhicule lui-même. Le châssis 15 est muni, à sa partie inférieure, d'une entretoise 18 supportant un axe d'articulation 19 autorisant la rotation du dispositif de manutention 1 dans un plan vertical P, l'axe d'articulation 19 étant relié à la poutre 16. L'entretoise 18 supporte également un axe 20 s'étendant selon une direction horizontale par rapport au plan vertical P.

De façon succincte, le dispositif de manutention 1 est mis en oeuvre de la manière suivante. Pour charger le dévidoir 2, on engage les fourches 10 du cadre 7 sur l'axe 20, la tige 13 du vérin étant sortie. On ramène le cadre 7 vers la structure de réception 14 en le bloquant sur celle-ci par l'intermédiaire d'un verrou 21. Cette opération manuelle terminée, on actionne le vérin 11 pour ramener l'ensemble contre la jupe 17 en position de roulage du véhicule 3. Le déchargement du dévidoir 2 s'effectue de manière inverse.

On notera que le vérin 11 est articulé par rapport au véhicule 3, comme cela est indiqué par les flèches F de la figure 1.

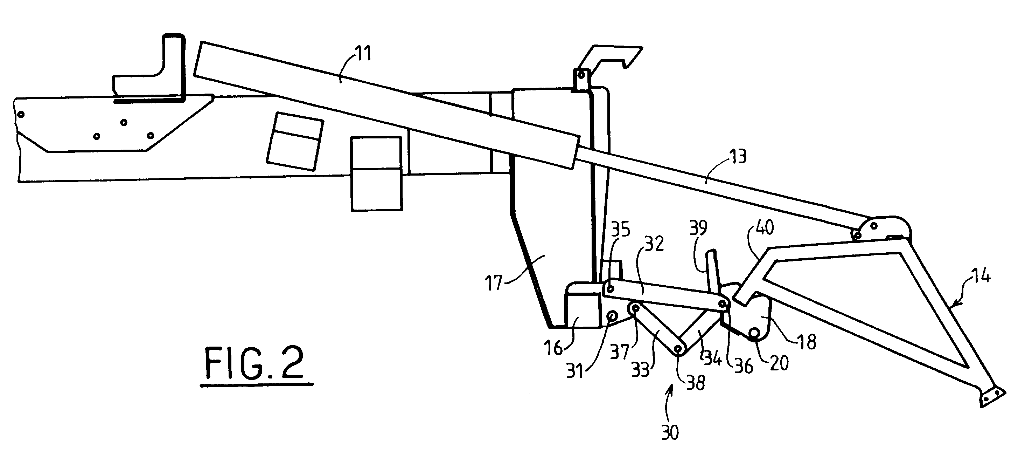

La figure 2 montre la structure d'un système articulé 30 selon l'invention combiné à la structure de réception 14 connue et décrite en référence à la figure 1. Comme indiqué précédemment, la garde au sol obtenue antérieurement est limitée par construction, puisque l'axe 19 est solidaire de la poutre 16. On retrouve les mêmes éléments désignés avec les mêmes repères sur la figure 2, notamment la poutre 16 solidaire de la jupe 17 et l'entretoise 18 munie de l'axe 20.

Le système articulé 30 est interposé entre le véhicule et la structure de réception 14, et plus précisément entre la poutre 16 et l'entretoise 18. Ce système 30 comprend un ensemble qui est constitué d'un bras 32 et de deux bielles 33 et 34 articulées entre elles, un tel ensemble étant prévu de part et d'autre de la structure de réception 14 et monté par l'intermédiaire d'une plaque 31 rapportée sur la poutre 16. Le montage d'un seul ensemble bras 32-bielles 33 et 34 est décrit ci-après.

Le bras 32 est relié à la plaque 31 par un axe d'articulation 35 et à l'entretoise 18 par un axe d'articulation 36. La bielle 33 est reliée à la plaque 31 par un axe d'articulation 37 d'une part, et à l'autre bielle 34 par un axe d'articulation 38 d'autre part. La bielle 34 est également articulée par rapport à l'entretoise 18 mais sur le même axe 36 que le bras 32. La bielle 34 est munie d'un prolongement 39 formant un moyen de butée de la structure 14 au niveau du cadre inférieur 40 de son châssis 15. Le bras 32 est placé au-dessus des bielles 33 et 34 et, dans la position de déchargement représentée sur la figure 2, on peut fixer la position d'arrêt soit par le vérin 11, soit par la butée du bras 32 sur la bielle 33. Les axes 35 et 37 solidaires de la plaque 31 sont placés à distance l'un de l'autre pour délimiter un côté fixe du système articulé 30. L'axe 35 est de préférence placé au-dessus de l'axe 37 dans le plan vertical. On notera que le point de reprise du dévidoir sur le sol est nettement abaissé par rapport à celui représenté à la figure 1, et qu'il n'est plus nécessaire de soulever le dévidoir 2 pour le relier à la structure 14.

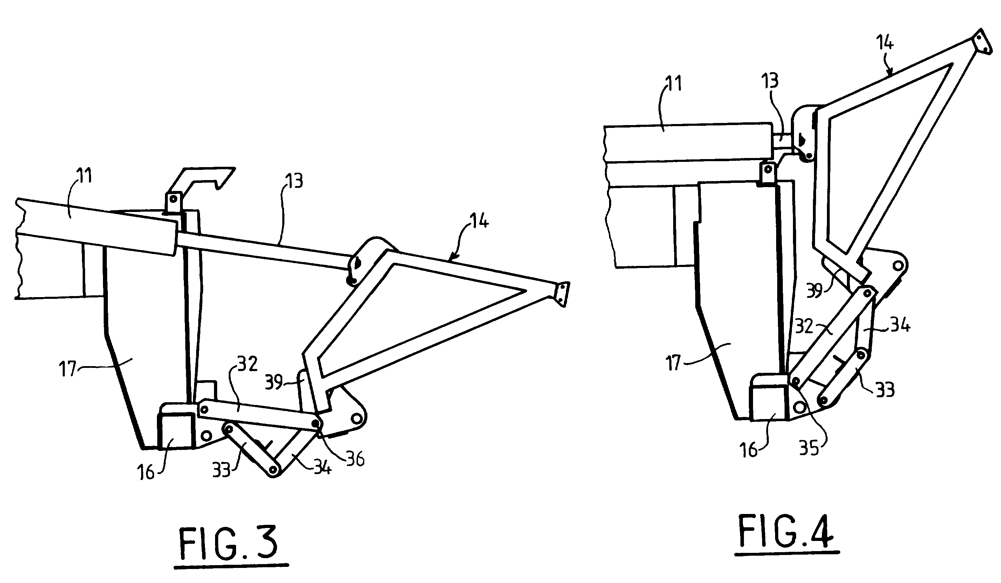

Les figures 3 et 4 illustrent deux positions de la structure de réception 14 par rapport au véhicule. Sur la figure 3, on a commandé le retrait du vérin 11 et la structure 14 a pivoté autour des axes 36 jusqu'à ce qu'elle vienne en butée sur les prolongements 39 des bielles 34. Jusqu'à cette position, le système articulé 30 ne subit aucune déformation. Sur la figure 4, le vérin 11 est complètement rentré et la structure 14 a pivoté autour des axes 35 jusqu'à son blocage sur le verrou prévu à cet effet. Pendant cette rotation, la structure 14 est maintenue par les bielles inférieures 33 et 34 et les prolongements 39.

Le fonctionnement découle de la description précédente et se déroule de la manière suivante. Le dévidoir 2 représenté à la figure 1 est amené par des manoeuvres simples sur le sol au voisinage de la structure 14 dans la position représentée sur la figure 2. Le cadre 7 du dévidoir est accroché sans aucune difficulté à la structure 14 par les fourches 10 sur l'axe 20 de l'entretoise 18 au niveau inférieur et sur le verrou 21 au niveau supérieur. On commande le relevage, et l'ensemble structure de réception/dévidoir pivote dans une première phase autour des axes 36 pour venir occuper la position représentée sur la figure 3. A cet instant, le cadre inférieur 40 de la structure de réception 14 vient en butée contre les deux prolongements 39, et l'ensemble précédent passe dans une position d'équilibre stable. Le vérin 11 poursuit sa course et la rotation s'effectue alors, dans une seconde phase, autour des axes 35, phase pendant laquelle la structure 14 et le dévidoir 2 sont maintenus en position par les moyens 39 formant butée. En position finale représentée sur la figure 4, la structure 14 et le dévidoir 2 subissent une élévation sensiblement égale à la longueur des bras 32. Bien entendu, les dimensions des bras 32 et des bielles 33 et 34 sont ajustées en fonction de la garde au sol recherchée et/ou l'éloignement en position de déchargement de la structure 14, c'est-à-dire du dévidoir 2 par rapport au véhicule.

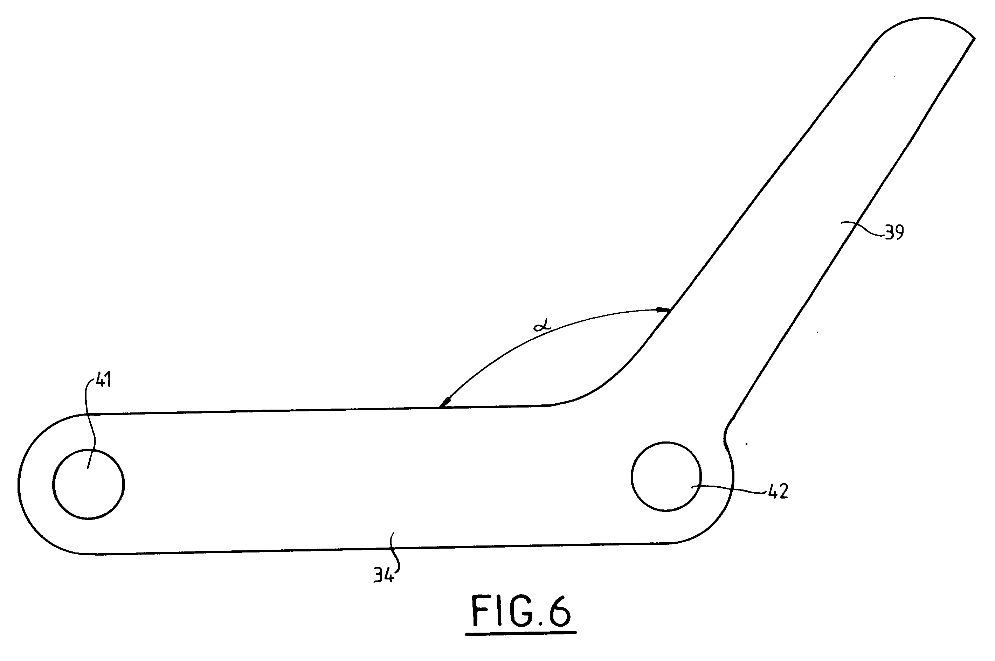

Sur la figure 5, on a représenté une variante du système articulé 30 suivant laquelle les bras 32a sont placés en-dessous des bielles 33a et 34a. Dans cette variante, ce sont les bielles 34a elles-mêmes qui constituent les moyens de butée de la structure 14 après la première phase de la rotation et pendant toute la seconde phase de rotation.

La figure 6 montre la réalisation concrète d'une bielle 34 munie à chaque extrémité de percements 41 et 42 pour recevoir respectivement les axes 38 et 36 de rotation. La bielle 34 est munie d'un prolongement 39 délimitant avec la bielle elle-même un angle α de l'ordre de 120°. La bielle 34 et son prolongement 39 sont réalisés sous la forme d'une plaque métallique usinée.

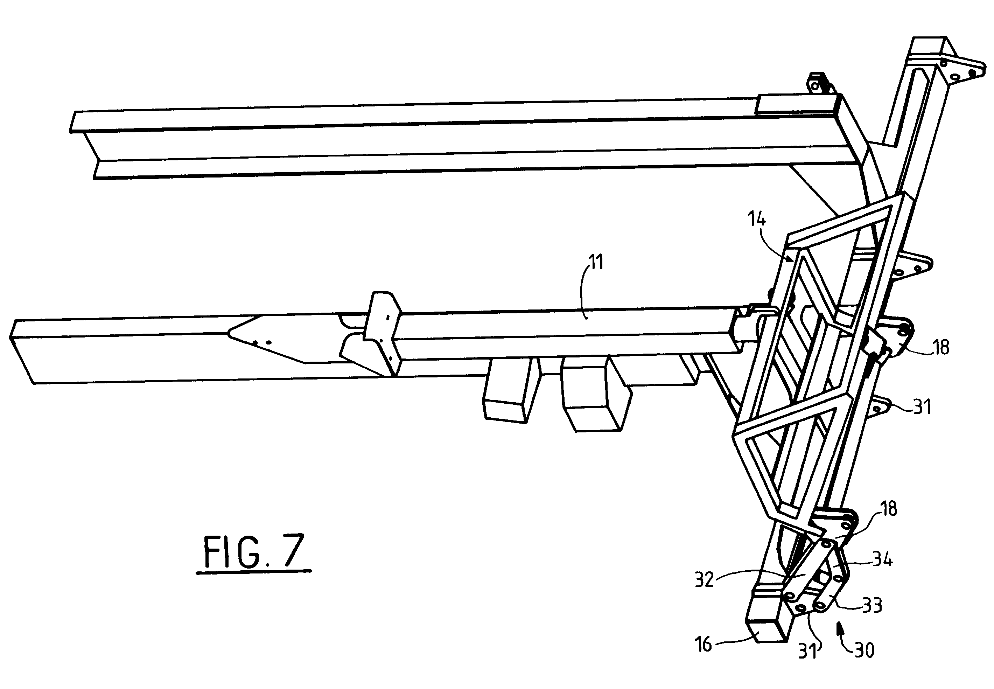

La figure 7 montre la réalisation complète du dispositif de manutention en position repliée sans dévidoir. La partie arrière du véhicule est en général équipée de deux dévidoirs pris en charge chacun par un dispositif de manutention. La poutre 16 porte deux structures de réception 14, dont une seule est représentée, fixées chacune par une paire de plaques 31 par l'intermédiaire de deux systèmes articulés 30 disposés de part et d'autre. Les deux structures 14 sont manoeuvrées indépendamment l'une de l'autre par un vérin 11. Sur la figure 7, on voit que la structure 14 est réalisée sous la forme d'un cadre muni à la partie basse de l'entretoise 18, dont on voit deux joues en saillie pour faciliter le guidage de la fourche 10 de chaque branche 8 du dévidoir.

La figure 8 montre le dispositif de manutention sur lequel est positionné le dévidoir 2. On retrouve le vérin 11, la structure de réception 14, la poutre transversale 16 fixée sur la jupe déflectrice 17. On voit partiellement le système articulé 30 qui est interposé entre la poutre 16 et la structure 14. Sur cette figure 8, on retrouve la partie extérieure du cadre 7 du dévidoir 2 constituée par une barre transversale 50 reliée à chaque extrémité aux branches 8. Cette barre 50 qui constitue la base du U est munie d'une flèche 51 terminée par une traverse 52 formant une poignée de manutention du dévidoir 2.

## Revendications

1. Dispositif de manutention pour charger ou décharger un dévidoir (2) porté par un véhicule (3), du type comportant un vérin de manutention (11) solidaire du véhicule (3), une structure de réception (14) du dévidoir (2), articulée par rapport au véhicule (3) et entraînée par le vérin (11), et un cadre (7) de fixation du dévidoir (2) apte à être verrouillé sur la structure de réception (14), caractérisé en ce qu'il comprend un système articulé (30) reliant le véhicule (3) à la structure de réception (14) pour assurer d'une part une rotation de la structure de réception (14) par rapport au système articulé (30) et d'autre part une rotation de la structure de réception (14) par rapport au véhicule (3), et des moyens (39) formant butée limitant la rotation de la structure de réception (14) par rapport au système articulé (30), ledit système articulé (30) étant apte à augmenter la garde au sol du dévidoir (2) et l'éloigner par rapport au véhicule (3).

2. Dispositif de manutention selon la revendication 1, caractérisé en ce que le système articulé (30) comprend un ensemble qui est constitué d'un bras (32) et de deux bielles (33, 34) articulées entre elles, un tel ensemble étant disposé de part et d'autre de la structure de réception (14).

3. Dispositif de manutention selon la revendication 2, caractérisé en ce que chaque bras (32) est disposé au-dessus des bielles associées (33, 34).

4. Dispositif de manutention selon la revendication 2 ou 3, caractérisé en ce que les moyens (39) formant butée sont constitués par un prolongement de chaque bielle (34) fixée à la structure de réception (14), sur lesquels vient s'appliquer ladite structure.

5. Dispositif de manutention selon la revendication 4, caractérisé en ce que le prolongement (39) délimite un angle d'environ 120° avec la bielle correspondante (34).

6. Dispositif de manutention selon la revendication 5, caractérisé en ce que chaque bielle (34) forme avec le prolongement (39) une pièce unique.

7. Dispositif de manutention selon la revendication 2, caractérisé en ce que chaque bras (32) est disposé en-dessous des bielles associées (33a, 34a).

8. Dispositif de manutention selon la revendication 7, caractérisé en ce que les moyens (39) formant butée sont constitués par les bielles (34a).
